**Europäisches Patentamt**

**European Patent Office**

**Office européen des brevets**

(19)

(11) Veröffentlichungsnummer: **0 170 825**
**B1**

(12) EUROPÄISCHE PATENTSCHRIFT

(45) Veröffentlichungstag der Patentschrift:
**26.10.88**

(21) Anmeldenummer: **85107207.4**

(22) Anmeldetag: **11.06.85**

(51) Int. Cl.⁴: **A 01 C 5/06**

(54) Vorsatzscharkörper.

(30) Priorität: **12.07.84 DE 3425639**

(43) Veröffentlichungstag der Anmeldung:
**12.02.86 Patentblatt 86/7**

(45) Bekanntmachung des Hinweises auf die Patenterteilung:
**26.10.88 Patentblatt 88/43**

(84) Benannte Vertragsstaaten:
**AT DE GB NL**

(56) Entgegenhaltungen:
**AU - A - 531 713**
**DE - C - 965 667**
**FR - A - 756 293**
**US - A - 1 627 537**
**US - A - 3 125 169**
**US - A - 4 321 972**

(73) Patentinhaber: **Amazonen-Werke H. Dreyer GmbH & Co.
KG, Postfach 51, D-4507 Hasbergen-Gaste (DE)**

(72) Erfinder: **Dreyer, Heinz, Dr., D-4507 Hasbergen (DE)**
Erfinder: **Gattermann, Bernd, D-2872 Hude (DE)**

(74) Vertreter: **Patentanwälte Grünecker, Kinkeldey,
Stockmair & Partner, Maximilianstrasse 58,
D-8000 München 22 (DE)**

## Beschreibung

Die Erfindung betrifft einen Vorsatzscharkörper gemäss dem Oberbegriff des Anspruchs 1.

Ein derartiger Vorsatzscharkörper ist aus der FR-A 756 293 bekannt. Der Vorsatzscharkörper, der vor ein Normalsäschar und an diesem befestigt wird, dient dazu, den Boden insbesondere beim Säen von Gras aufzuschlitzen und ist hierzu in der Art eines Schlitzmessers ausgebildet.

Dieser Scharkörper ist jedoch in mancherlei Hinsicht nachteilhaft. So ist es z.B. erforderlich, nach Abnutzung der unteren Schneidkante des Scharkörpers den gesamten Scharkörper auszuwechseln, weil er einteilig ausgebildet ist.

Desweiteren ist die Bodenvorbereitung zur Ablage der Körner nicht optimal, weil das Ziehen eines Schlitzes insbesondere beim Säen von Gras nicht zu optimalen Keimbedingungen führt.

Aus der landtechnischen Fachzeitschrift «top agrar 6/1984» Seiten 38 und 39 ist eine mit Normalsäscharen ausgerüstete Drillmaschine bekannt geworden, bei der vor den Normalsäscharen Schlitzmesser angeordnet sind. Nachteilig ist bei dieser Drillmaschine die Befestigung der Schlitzmesser an einem gesonderten Haltearm, der an dem jeweiligen Scharhaltearm angeschweisst ist. Es müssen eine Vielzahl unterschiedlicher Haltearme für die Schlitzmesser vorhanden sein, da die Scharhaltearme im Bereich der Laufräder der Drillmaschine vielfach gekröpft sind. Ausserdem haben die Schlitzmesser aufgrund der langen und nach unten gerichteten Haltearme keinen ausreichend festen Halt, und es besteht die Gefahr, dass die Schlitzmesser nicht genau mittig in bezug auf die Scharspitze des Normalsäschares vorweg durch den Boden schneiden. Vor allem in Kurvenfahrten werden die Haltearme verbogen, so dass die Schlitzmesser seitlich des Normalsäschares einen Schlitz in den Boden schneiden. In diesem Falle ist eine Grasdurchsaat nicht möglich.

Aus dem deutschen Patent 3 217 350 ist ein Vorsatzscharkörper bekannt, der als Bandsaatscharkörper ausgebildet ist. Mit Hilfe dieses Vorsatzscharkörpers wird zwar der Einsatzbereich einer mit Normalsäscharen ausgerüsteten Drillmaschine erweitert, jedoch kann der dort beschriebene Vorsatzscharkörper nicht zur Grasdurchsaat von Wiesenflächen eingesetzt werden.

Aus der US-A 3 125 169 ist ein Saatschuh bekannt, der auf ein Säschar aufgesteckt werden kann. Das Säschar weist an einem Halter ein Schlitzmesser auf. Wenn dieses Schlitzmesser abgenutzt ist, kann der Schuh auf den Halter aufgesteckt werden, wobei dann das am Halter ausgebildete Schlitzmesser den Schlitz erzeugt. Bei dem Schar handelt es sich somit um ein Schar, mit dem Schlitze in den Boden gezogen werden können, jedoch nicht um ein Normalsäschar.

Der Erfindung liegt ausgehend von dem genannten Stand der Technik die Aufgabe zugrunde, den Einsatz einer mit Normalsäscharen ausgerüsteten Drillmaschine für die Grasdurchsaat auf einfache Weise möglich zu machen, wobei eine zuverlässige Saatgutablage, eine einfache Befestigung des Vorsatzscharkörpers und auch eine einfache Austauschbarkeit nach Abnutzung der Schlitzmesser möglich sein soll.

Diese Aufgabe wird mit einem Vorsatzscharkörper mit den Merkmalen des Anspruchs 1 gelöst.

Mit diesen Merkmalen wird eine sichere Fixierung des Schlitzmessers in bezug auf die Scharspitze des Normalsäschares erreicht. Das Normalsäschar befindet sich immer mittig oberhalb des von dem Schlitzmesser erzeugten Schlitz, in dem der Grassamen durch das Normalsäschar abgelegt wird.

Durch die Ausbildung des Vorsatzscharkörpers als eine zum Normalsäschar hin offene im Querschnitt U-förmige Tasche wird eine sichere und einfache Befestigungsmöglichkeit geschaffen. Der Vorsatzscharkörper fixiert das Schlitzmesser in bezug auf die Scharspitze des Normalsäschares dadurch sicher. Das Normalsäschar befindet sich immer mittig oberhalb des vom Schlitzmesser erzeugten Schlitzes, in dem der Grassamen durch das Normalsäschar abgelegt wird. Der Umbau und die einfache Fixierung des Vorsatzscharkörpers an dem Normalsäschar ermöglicht es dem Landwirt, sehr schnell eine mit Normalsäscharen ausgestattete Drillmaschine für die Grasdurchsaat von Wiesenflächen auszustatten. Dadurch, dass die U-förmige Tasche ausserdem noch nach hinten verlängerte Leitbleche aufweist, die die Auslauföffnung nach unten hin begrenzen und fortsetzen, wird eine sichere Führung bei der Grassamenablage auch dann noch erreicht, wenn die Grassamen das Normalsäschar bereits verlassen haben. Dies ermöglicht eine exakte und saubere Ablage der Grassamen.

Die Verlängerung der Auslauföffnung des Normalsäschares durch entsprechende Seitenwände der U-förmigen Tasche sorgt ausserdem noch für ein kraftarmes Ziehen der Säschare durch den Boden.

Die in vorteilhafter Weiterbildung der Erfindung vorgesehene Anordnung des Schlitzmessers in einem Zwischenstück, welches dann mit der U-förmigen Tasche verbunden wird, bringt den Vorteil mit sich, dass für verschiedene Formen der U-förmigen Tasche dieselbe Form des Schlitzmessers verwendet werden kann. Das Zwischenstück wird dann im Einschubbereich, in dem es in die Tasche gesteckt wird, entsprechend der Tasche ausgebildet und ermöglicht so die einfache Befestigung der Schlitzmesser.

In einer weiteren Ausgestaltung der Erfindung ist vorgesehen, dass das Schlitzmesser unter der Scharspitze des Normalsäschares angeordnet ist. Desweiteren ist es von Vorteil, wenn das Zwischenstück keilförmig ausgestaltet ist, weil sich dadurch das Schlitzmesser dann sicher an der U-förmigen Tasche befestigen lässt.

Ein leichtgängiges Schlitzen des Bodens kann dadurch erreicht werden, dass das Schlitzmesser vor der Scharspitze des Normalsäschares angeordnet ist und die Scharspitze des Normalsäschares nach unten überragt. Durch diese Anordnung des Schlitzmessers ergibt sich ein besonders kraftsparender, ziehender Schnitt.

Gemäss einer weiteren Ausgestaltung der Erfindung weist das Zwischenstück im Bereich der Scharspitze des Normalsäschares eine der Scharspitze des Normalsäschares korrespondierende Form auf.

Um das Schlitzmesser einfach auswechseln zu können, wenn es verschlissen bzw. stumpf ist, ist das Schlitzmesser vorzugsweise lös- und auswechselbar an dem Vorsatzscharkörper angeordnet. Dabei ist in bevorzugter Weise vorgesehen, dass das Schlitzmesser umdrehbar ist und zumindest zwei Schneiden aufweist.

Schliesslich wird ein besonders gutes Schnittergebnis des Schlitzmessers erreicht, wenn die Schneide des Schlitzmessers von vorne oben nach hinten unten geneigt verläuft.

Nachfolgend wird die Erfindung anhand der Zeichnungen näher erläutert. Es zeigen:

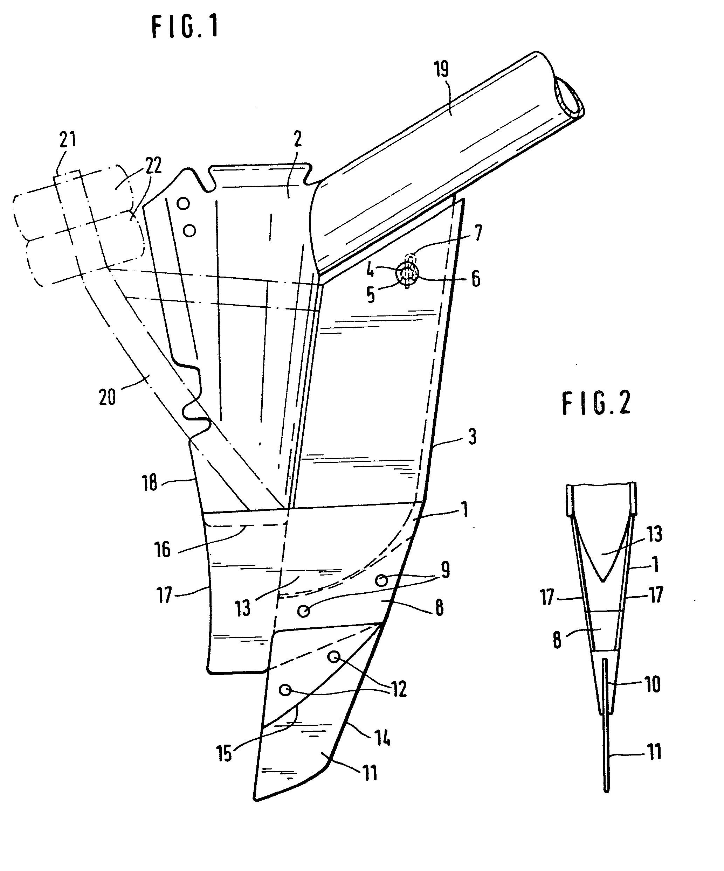

Figur 1 einen Vorsatzscharkörper in Seitenansicht,

Figur 2 die untere Hälfte des Vorsatzscharkörpers gemäss Figur 1 in der Ansicht von hinten und

Figur 3 einen weiteren Vorsatzscharkörper in der Seitenansicht.

Der als Grasschlitzschar ausgebildete Vorsatzscharkörper 1 ist, um mit einer mit Normalsäscharen 2 ausgerüsteten Drillmaschine Grassamen in Wiesenflächen nachsäen zu können, an dem Normalsäschar 2 lösbar und abnehmbar angeordnet. Der Vorsatzscharkörper 1 weist in seinem oberen Teil die U-förmige Tasche 3 auf, die um den vorderen schmalen Bereich des Normalsäschares 2 fasst. Die Tasche 3 weist in ihrem oberen Bereich die Bohrung 4 auf, die mit der in dem Normalsäschar 2 sich befindenden Bohrung 5 zur Deckung zu bringen ist. Durch den durch die Bohrung 4 und 5 zu steckenden Sicherungsbolzen 6 mit dem Federstecker 7 wird der Vorsatzscharkörper 1 auf dem Normalsäschar 2 gesichert. An dem vorderen-unteren Bereich der Tasche 3 ist das keilförmige Zwischenstück 8 mit den Nieten 9 befestigt. In die Unterseite dieses keilförmigen Zwischenstückes 8 ist die Nut 10 gefräst, so dass das Schlitzmesser 11 an dem Zwischenstück 8 mit Hilfe der Bolzen 12 zu befestigen ist. Dieses zwischen der Scharspitze 13 des Normalsäschares 2 und dem Schlitzmesser 11 angeordnete keilförmige Zwischenstück 8 weist eine mit der Scharspitze 13 korrespondierende Form auf. Das Schlitzmesser 11 ist unterhalb der Scharspitze 13 des Normalsäschares 2 angeordnet und überragt somit die Scharspitze 13 nach unten. Die Schneide 14 des Schlitzmessers 11 verläuft von vorne-oben nach hinten-unten, so dass sich ein ziehender Schnitt ergibt. Das keilförmige Zwischenstück (8) verläuft auf seiner Unterseite 15 schräg nach hinten-unten und der Querschnitt dieses Zwischenstücks 8 verbreitert sich nach hinten. Durch die Verbreiterung des Zwischenstückes 8 wird der von dem Schlitzmesser 11 in die Wiesenböden geschnittene Schlitz erweitert, und die Schlitzwände werden gelockert, so dass der auf die in dem Schlitz gelockerte Erde fallende Grassamen optimale Keimbedingungen vorfindet.

Unterhalb und jeweils neben der Auslauföffnung 16 des Normalsäschares 2 sind aufrechte Leitbleche 17 angeordnet. Die Leitbleche 17 sind in Verlängerung der Seitenwände 18 der Auslauföffnungen 16 des Normalsäschares 2 angebracht. Weiterhin sind die Leitbleche 17 jeweils eine Verlängerung der U-förmigen Tasche 3 nach hinten. Durch diese Leitbleche 17 wird der Grassamen sicher von der Auslauföffnung 16 des Normalsäschares 2 in den in den Wiesenboden geschnittenen und erweiterten Schlitz geleitet.

Wenn die an den Scharhaltearmen 19 in bekannter Weise angreifenden Schardruckfedern nicht genügend Schardruck aufbringen können, ist es erforderlich, dass an dem Vorratskörper 1 die mit strichpunktierten Linien angedeutete Halterung 20 angebracht wird. Auf den nach oben ragenden Bolzen 21 der Halterung 20 können Gewichtsstücke 22 aufgesteckt werden, die dann das Schlitzmesser 11 mit Unterstützung der Schardruckfedern in den Wiesenboden drücken.

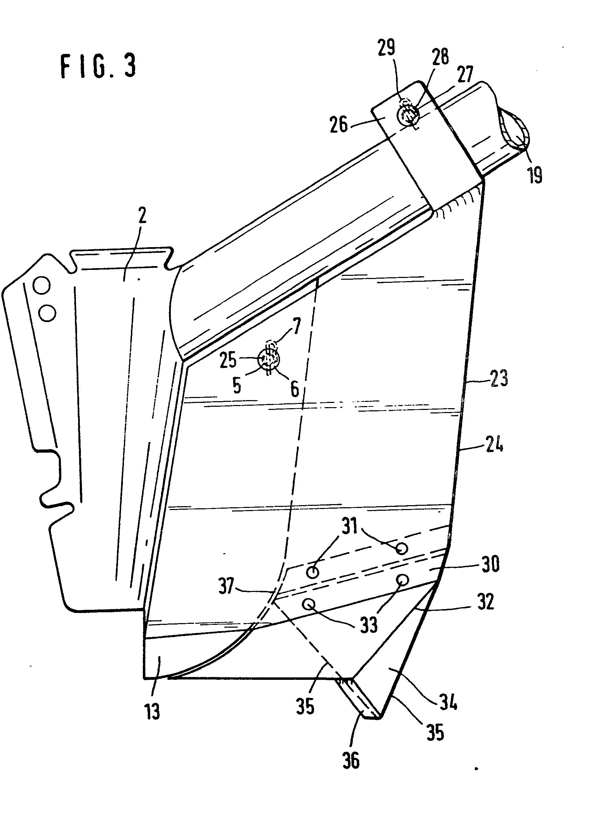

Der als Grasschlitzschar ausgebildete Vorsatzscharkörper 23 gemäss Fig. 3 ist an dem Normalsäschar 2 lösbar und abnehmbar angeordnet. Der Vorsatzscharkörper 23 weist die um den schmalen vorderen Bereich des Normalsäschares 2 fassende U-förmige Tasche 24 auf. Die Tasche 24 weist in ihrem oberen-hinteren Bereich die Bohrung 25 auf, die mit der in dem Normalsäschar 2 sich befindenden Bohrung 5 zur Deckung zu bringen ist. Durch den durch die Bohrungen 5 und 25 zu stekkenden Sicherungsbolzen 6 mit dem Federstekker 7 wird der Vorsatzscharkörper 27 auf dem Normalsäschar 2 gesichert. Zusätzlich ist an dem vorderen-oberen Ende der Tasche 24 die U-förmige Lasche 26 angeschweisst, die um den Scharhaltearm 19 des Normalsäschares 2 fasst. Durch die Löcher 27 der Lasche 26 ist der Sicherungsbolzen 28 mit den Federsteckern 29 gesteckt. Hierdurch wird eine sehr sichere Befestigung des Vorsatzscharkörpers 23 an dem Normalsäschar gewährleistet.

An dem unteren Ende der Tasche 24 ist das Zwischenstück 30 mit den Nieten 31 befestigt. Das Zwischenstück 30 weist auf seiner unteren Vorderseite die schlitzförmige Nut auf, in der mit den Bolzen 33 das Schlitzmesser 34 lösbar angebracht ist. Das Schlitzmesser 34 weist die beiden Schneiden 35 auf, so dass das Schlitzmesser 34 umgedreht werden kann, wenn die vordere Schneide 35 stumpf geworden ist. Das Schlitzmesser 34 überragt die Scharspitze 13 des Normalsäschares 2 nach unten. Hinter dem Schlitzmesser 34 ist an dem Zwischenstück 30 der Erweiterungskörper 36, der breiter als das Schlitzmesser 34 ist, angeordnet. Der Erweiterungskörper 36 erweitert den von dem Schlitzmesser in den Wiesenboden geschnittenen Schlitz, indem er die Seitenwände des in den Wiesenboden geschnittenen Schlitzes lockert. Das Schlitzmesser 34 ist vor der Scharspitze 13 des Normalsäschares 2 angeordnet, wobei deren Schneide von vorne oben nach hinten unten verläuft. Das zwischen der Scharspitze 13 des Normalsäschares 2 und dem Schlitzmesser 34 angeordnete Zwischenstück 30 weist im Bereich der Scharspitze 13 des Normalsäschares 2 eine der Scharspitze 13 korrespondierende Form auf.

**Patentansprüche**

1. Vorsatzscharkörper (1), der an einem Normalsäschar (2) abnehmbar angebracht werden kann, dabei das Normalsäschar (2) nach unten überragt und in seinem vorderen und unteren Bereich ein Schlitzmesser (11) aufweist, das im Unterschied zum Normalsäschar einen Schlitz in den Boden zieht, dadurch gekennzeichnet, dass der Vorsatzscharkörper (1) als eine zum Normalsäschar (2) hin offene, im Querschnitt U-förmige Tasche (3) ausgebildet ist, die in Höhe der Auslauföffnung (16) des Normalsäschars (2) nach hinten verlängerte Leitbleche (17) aufweist, welche seitliche Begrenzungen (18) der Auslauföffnung (16) nach unten fortsetzen und dass das Schlitzmesser (11) die Tasche (3) nach unten überragt und dass hinter der Schneide (14) des Schlitzmessers (11) ein Erweiterungskörper (8) vorhanden ist, der breiter als das Schlitzmesser (11) ist.

2. Vorsatzscharkörper nach Anspruch 1, dadurch gekennzeichnet, dass das Schlitzmesser (11) mittels eines Zwischenstücks (8) im unteren Bereich der Taste (3) befestigt ist.

3. Vorsatzscharkörper nach Anspruch 1 oder 2, dadurch gekennzeichnet, dass das Schlitzmesser (11) unter der Scharspitze (13) des Normalsäschares (2) angeordnet ist.

4. Vorsatzscharkörper nach Anspruch 2, dadurch gekennzeichnet, dass das Zwischenstück (8, 30) keilförmig ist.

5. Vorsatzscharkörper nach Anspruch 4, dadurch gekennzeichnet, dass das Schlitzmesser (11, 34) an dem Zwischenstück (8, 30) angeordnet ist.

6. Vorsatzscharkörper nach mindestens einem der Ansprüche 1 bis 5, dadurch gekennzeichnet, dass das Schlitzmesser (34) vor der Scharspitze (13) des Normalsäschares (2) angeordnet ist und die Scharspitze (13) des Normalsäschares (2) nach unten überragt.

7. Vorsatzscharkörper nach Anspruch 6, dadurch gekennzeichnet, dass die U-förmige Tasche (3, 24) mit Hilfe von Schnellverschlüssen (6, 7, 28, 29) an dem Normalsäschar (2) und/oder an dem Scharhalter (19) des Normalsäschares (2) angeordnet ist.

8. Vorsatzscharkörper nach Anspruch 2, dadurch gekennzeichnet, dass das Zwischenstück (8, 30) im Bereich der Scharspitze (13) des Normalsäschares (2) eine der Scharspitze (13) korrespondierende Form (37) aufweist.

9. Vorsatzscharkörper nach mindestens einem der Ansprüche 1 bis 8, dadurch gekennzeichnet, dass das Schlitzmesser (11, 34) lös- und auswechselbar an dem Vorsatzscharkörper (1, 23) angeordnet ist.

10. Vorsatzscharkörper nach Anspruch 9, dadurch gekennzeichnet, dass das Schlitzmesser (34) umdrehbar an dem Vorsatzscharkörper (23) angeordnet ist und zumindest zwei Schneiden (35) aufweist.

11. Vorsatzscharkörper nach einem der Ansprüche 1 bis 10, dadurch gekennzeichnet, das die Schneide (14, 35) des Schlitzmessers (11, 34) von vorne-oben nach hinten-unten geneigt verläuft.

**Claims**

1. Coulter attachment (1), which can be detachably mounted on a standard sowing coulter (2) and which protrudes downwardly of the standard sowing coulter (2) and has, in its front and lower region, a cutting blade (11) which, in contrast to the standard sowing coulter, makes a slit in the ground, characterised in that the coulter attachment (1) is in the form of a pocket assembly (3) which is open in the direction towards the standard sowing coulter (2) and has a U-shaped cross-section, the pocket assembly having rearwardly extended deflector plates (17) which are situated on a level with the discharge aperture (16) of the standard sowing coulter (2) and which extend lateral boundaries (18) of the discharge aperture (16) downwardly, in that the cutting blade (11) protrudes downwardly beyond the pocket assembly (3), and in that a widened portion (8), which ist wider than the cutting blade (11), is situated behind the cutting edge (14) of the cutting blade (11).

2. Coulter attachment according to claim 1, characterised in that the cutting blade (11) is secured in the lower region of the pocket assembly (3) by means of an intermediate part (8).

3. Coulter attachment according to claim 1 or 2, characterised in that the cutting blade (11) is disposed below the coulter tip (13) of the standard sowing coulter (2).

4. Coulter attachment according to claim 2, characterised in that the intermediate part (8, 30) is wedge-shaped.

5. Coulter attachment according to claim 4, characterised in that the cutting blade (11, 34) is disposed on the intermediate part (8, 30).

6. Coulter attachment according to at least one of claims 1 to 5, characterised in that the cutting blade (34) is disposed in front of the coulter tip (13) of the standard sowing coulter (2), and the coulter tip (13) of the standard sowing coulter (2) protrudes downwardly.

7. Coulter attachment according to claim 6, characterised in that the U-shaped pocket assembly (3, 24) is disposed on the standard sowing coulter (2) and/or on the coulter holder (19) of the standard sowing coulter (2) by means of snap closures (6, 7, 28, 29).

8. Coulter attachment according to claim 2, characterised in that, in the region of the coulter tip (13) of the standard sowing coulter (2), the intermediate part (8, 30) has a form (37) corresponding to the coulter tip (13).

9. Coulter attachment according to at least one of claims 1 to 8, characterised in that the cutting blade (11, 34) is detachably and interchangeably disposed on the coulter attachment (1, 23).

10. Coulter attachment according to claim 9, characterised in that the cutting blade (34) is pivotably disposed on the coulter attachment (23) and has at least two cutting edges (35).

11. Coulter attachment according to any of claims 1 to 10, characterised in that the cutting edge (14, 35) of the cutting blade (11, 34) extends inclinedly from front-top rear-bottom.

## Revendications

1. Accessoire de soc (1) susceptible de d'être fixé de manière amovible à un soc normal de semoir (2), ce soc normal (2) venant en saillie par le bas et comportant dans sa zone avant et dans sa zone arrière d'un couteau de refente (11) qui contrairement à un socle normal, coupe une fente dans le sol, caractérisé en ce que l'accessoire de soc (1) est en forme de poche (3) à section en U ouverte vers l'arrière par rapport à un soc normal de semoir (2), poche qui comporte à la hauteur de l'orifice de sortie (16) du soc normal de semoir (2), des tôles directrices (17) prolongées vers l'arrière et qui prolongent les parties limites latérales (18) de l'orifice de sortie (16), vers le bas et en ce que le couteau de refente (11) dépasse vers le bas de la poche (3) et en ce que derrière l'arête (14) du couteau (11) il y a un organe-élargisseur (8) qui est plus large que le couteau de refente (11).

2. Accessoire de soc selon la revendication 1, caractérisé en ce que le couteau de refente (11) est fixé dans la zone inférieure de la poche (3) à l'aide d'une pièce intermédiaire (8).

3. Accessoire de soc selon la revendication 1 ou la revendication 2, caractérisé en ce que le couteau de refente (11) est prévu sous la pointe (13) du soc normal (2) de semoir.

4. Accessoire de soc selon la revendication 2, caractérisé en ce que la pièce intermédiaire (8, 30) est en forme de coin.

5. Accessoire de soc selon la revendication 4, caractérisé en ce que le couteau de refente (11, 34) est prévu sur la pièce intermédiaire (8, 30).

6. Accessoire de soc selon au moins l'une des revendications 1 à 5, caractérisé en ce que le couteau de refente (34) est monté devant la pointe (13) du soc normal (2) des semoir et dépasse vers le bas la pointe (13) du soc normal (2).

7. Accessoire de soc selon la revendication 6, caractérisé en ce que la poche (3, 24) en forme de U est fixée au soc normal de semoir (2) et/ou au support de soc (19) d'un soc normal de semoir (2) à l'aide de moyens de liaison rapides (6, 7, 28, 29).

8. Accessoire de soc selon la revendication 2, caractérisé en ce que la pièce intermédiaire (8, 30) comporte au niveau de la pointe (13) du soc normal (2) une forme (37) correspondant à la pointe de soc (13).

9. Accessoire de soc selon au moins l'une des revendications 1 à 8, caractérisé en ce que le couteau de refente (11, 34) est monté de façon libre et amovible sur le corps de l'accessoire de soc (1, 23).

10. Accessoire de soc selon la revendication 9, caractérisé en ce que le couteau de refente (34) est monté de manière non rotative sur le corps de l'accessoire (23) et comporte au moins deux arêtes (35).

11. Accessoire de soc selon l'une des revendications 1 à 10, caractérisé en ce que l'arête (14, 35) du couteau de refente (11, 34) est inclinée de l'avant et d'en haut vers le bas et l'arrière.

**FIG.1**

**FIG.2**

FIG. 3